# NEW EUROPEAN PATENT SPECIFICATION

(11) **EP 1 425 211 B2**
(45) Date of publication and mention of the opposition decision: **21.09.2011**
(45) Mention of the grant of the patent: 01.03.2006
(21) Application number: 02760882.7
(22) Date of filing: 13.09.2002
(51) Int. Cl.: B62M 23/02

(54) **CYCLE WITH AUXILIARY PROPULSION**
FAHRRAD MIT HILFSANTRIEB
BICYCLETTE A PROPULSION AUXILIAIRE

(30) Priority: 13.09.2001 NL 1018948
(43) Date of publication of application: 09.06.2004
(73) Proprietor: Sparta B.V., 7300 AA Apeldoorn (NL)
(72) Inventor: RIP, Boudewijn, NL-7557 BV Hengelo (NL); VAN EERD, Vincent, Frans, Jozef, NL-3817 AW Amersfoort (NL)
(74) Representative: Haan, Raimond
(86) International application number: PCT/NL2002/000587
(87) International publication number: WO 2003/022671

(56) References cited:
- EP-A- 0 686 521
- EP-A- 0 784 008
- EP-A- 0 798 204
- EP-A- 0 814 557
- EP-A- 0 826 590
- EP-A- 1 020 319
- EP-A1- 0 497 510
- EP-A1- 0 594 954
- EP-A1- 0 798 204
- EP-A1- 0 860 353
- EP-A2- 0 686 521
- EP-A2- 0 784 008
- EP-A2- 8 260 590
- EP-B1- 0 079 573
- EP-B1- 1 142 780
- WO-A-01/30643
- WO-A-99/08924
- WO-A1-01/30643
- WO-A1-99/08924
- DE-A- 19 753 047
- DE-A1- 19 621 440
- DE-A1- 19 710 950
- DE-A1- 19 732 430
- DE-A1- 19 753 047
- DE-U- 20 012 972
- DE-U- 20 018 467
- DE-U1- 20 018 467
- DE-U1- 29 721 170
- FR-A1- 2 768 990
- GB-A- 2 050 270
- GB-A- 2 050 270
- JP-A- 11 105 778
- JP-A- 11 321 748
- JP-A- 2001 171 575
- US-A- 5 602 448
- US-A- 5 603 388
- US-B1- 6 286 616
- US-B1- 6 286 616
- 'Design Power' AKTIV RADFAHREN 1999, MUENCHEN, DEUTSCHLAND, pages 48 - 49
- FIRMA YAMAHA: 'Worlds First Electro-hybrid Bicycle ¨Yamaha PAS¨' NEWS RELEASE 27 July 1993,
- 'Mercedes-Benz Hybrid Bike' AKTIV RADFAHREN 1999, MUENCHEN, DEUTSCHLAND,
- E-GO OWNER'S HANDBOOK August 2000, page 21
- HANNES NEUPERT DAS POWERBIKE, FAHRRÄDER MIT ELEKTRISCHEM ZUSATZANTRIEB 1997,
- 'Sanyo Integral CMU3' ALFRED THUN GMBH & CO. KG August 1998, ENNEPETAL, DEUTSCHLAND,
- RADFAHREN no. 6, 1986, page 27
- ENTWICKLUNG UND ERPROBUNG ELEKTRISCH BETRIEBENER LEICHTMOFAS/MOFAS April 1988, page 1

## Description

Cycles with auxiliary motor are known in many embodiments. Embodiments are also known wherein the auxiliary motor is an electric motor.

Known from WO 01/30643 Al is an electrically assisted cycle which makes use of information relating to the pedalling force of the rider to control the auxiliary propulsion of the cycle. Such a cycle has drawbacks however, including the fact that the battery detracts from the appearance of the cycle.

EP-A-0826590 discloses an electrically assisted vehicle having a driving wheel driven by human driving power and electric driving power and a torque detection section to detect the human driving power applied to the driving power applying section. Also an electric motor is provided. The battery of this cycle is removable, e.g. for charging.

GB-A-2050270 discloses an electric bicycle, comprising storage batteries which ensure a supply of current to an electric motor, the batteries being capable of connection both in series and in parallel with the motor or motors under the action of a reversing switch. A second switch is provided for ensuring the opening or closing of the battery circuit.

The present invention provides a cycle, comprising:
- a frame,
- one or more wheels arranged rotatably on the frame via wheel axles,
- drive means for driving the wheels wholly or partly with human force via transmission means, an auxiliary propulsion forming part of the drive means,
- a power source including a battery arranged in a main tube of the frame, said main tube comprising a charter connection,
- measuring means for measuring the muscular driving force of the rider and control means for controlling the power of auxiliary propulsion with respect to the measured muscular power of the rider; and
- an external charging device to be coupled via the charger connection to the battery for charging the battery arranged in the main tube of the frame, wherein the power source and/or the auxiliary propulsion are arranged in or on the cycle in a manner which is as invisible as possible from the outside, wherein thy battery is arranged in the main tube of the frame, and said auxiliary propulsion comprising an electric hub motor.

This has the advantage, among others, that the cycle becomes more attractive for particular consumers who wish to prevent third parties immediately knowing that it is a cycle with auxiliary motor.

The cycle comprises measuring means for measuring the muscular driving force of the rider. In order to comply with determined legal regulations, it may be important that a cycle does not have an auxiliary propulsion without at least also being driven by the muscular power of the rider. For this purpose the measuring means can generate signals relating to the driving force exerted by muscular power, and a determined quantity of auxiliary propulsion can be added on the basis hereof.

The cycle comprises at least one battery for storing electrical energy which is arranged in the frame of the cycle. Such a placing in the frame has the advantages that the battery is very well protected against outside influences, whereby it cannot be damaged. In the case of failure/exploding of the battery or short-circuiting, there is no resulting danger for the rider. A further advantage is that the rider cannot perform any operations on the battery or cause damage to the battery. In addition, the appearance of the frame is similar to a frame of a cycle without battery. A further advantage is that the battery cannot be easily stolen.

In a further embodiment the battery comprises a number of separate elements enclosed by a thin sleeve-like body which is for instance manufactured from plastic. It is difficult to place a large number of separate elements in the frame tube, although a number of cells which are held together can be placed in the frame tube in simple and stable manner, for instance because they are held together in well-positioned manner. A further advantage of a thin plastic body is that it takes up little space and can be applied in a frame tube of limited size.

In a further preferred embodiment control means for charging and discharging the battery are arranged in the frame. This has the advantage that very good battery maintenance is possible. Batteries are vulnerable to overcharging, overly fast charging or discharging, or to high temperatures which can occur therein. By keeping track of many of these parameters and storing important elements of this data, such control means can greatly increase the lifespan of a battery. By placing these control means with the battery it is possible to guarantee that the correct data is always available in the correct battery, and that no discharge cycles are carried out without being recorded by control means associated with the battery. This enables the consumer to obtain better and more clearly defined guarantees from suppliers.

In a further embodiment the control means are arranged in the frame together with the battery and a closing member for closing the main tube. If a cycle is provided with power supply means such as a transformer which can be connected to the mains supply, the size and weight thereof can adversely affect the cycle. It is therefore recommended to provide transformer means which supply the energy for charging the battery and can be uncoupled from the control means for controlling the charging and discharging of the battery. This has the additional advantage that, depending on possible desired situations, a lighter, relatively slowly charging transformer or a heavier, relatively rapidly charging transformer can be chosen. The control means for charging or discharging the battery can then control the charging subject to the type of transformer used. The light charger can then be carried relatively easily should for instance outdoor charging be found to be necessary.

The auxiliary propulsion comprises an electric hub motor arranged in the hub of the axle of the rear wheel for producing at least part of the driving of the rear wheel. The placing in the hub of the rear wheel has the advantage of contributing to the relative inconspicuousness of the auxiliary propulsion. A further advantage of placing a motor in the hub is that, owing to the direct transmission of the motor onto the rear wheel, there are few transmission losses.

The electric hub motor is preferably provided with a transmission with two or more gears, which transmission preferably comprises one or more planetary systems. This has the advantage that, for instance in the case of low speeds or steeper slopes, less pedalling force and/or auxiliary propelling force or torque is required. Such a transmission is preferably embodied as one or more planetary systems. The transmission can herein change the motor and the muscular force transmitted to the hub via the chain. It is further possible herein to place a derailleur between the hub and the chain, whereby desired transmission ratios can be adjusted using a plurality of sprockets.

The cycle preferably further comprises switching means for switching from the motor to dynamo. If the battery is defective or completely empty, the lighting of the cycle can continue to function by means of such a dynamo action of the motor. A further advantage is that no separate dynamo is therefore necessary for this purpose. This dynamo function is primarily intended for the lighting function. In order to have such a motor function as dynamo for the lighting, circuits in a very light form are sufficient. The advantage of such a light dynamo action is that it produces a negligible extra load for a cyclist who is cycling on the cycle while using this function but without motor operation. In respect of size such a load is comparable to the load of a conventional cycle dynamo. In this embodiment the drawback of the resistance and wear of the cycle tyre due to the conventional dynamo is further obviated.

In a further preferred embodiment an axle comprises a groove for a wire feed-through for the motor. In the assembled state this groove is preferably situated on the underside of the axle. Such a groove has the advantage that wires used for electricity are practically invisible. In addition, this wiring is well protected when the cycle falls or against possible vandalism. Such a construction is very robust.

According to an embodiment the cycle further comprises pulse width modulating means for power supply of electrical parts such as lighting. This is very advantageous if the battery produces a different voltage from that required by such electrical subsystems. For instance in the use of cycle lighting it is very advantageous to apply a 6-volt light bulb. At the desired light output of for instance 3 Watts, a 6-volt light bulb has a filament of a determined thickness. At this thickness the filament is relatively strong. If a light bulb of the same wattage were applied at for instance 24-volts, the filament would be so thin that it would be vulnerable for use on a cycle. The filament would have a very short lifespan due to impacts during use of the cycle. Pulse width modulation in this application has the advantage that from a voltage supply of for instance 12-24 volts a voltage can be produced of for instance 6-volts with relatively negligible energy losses. A further advantage hereof is that standard light bulbs can be applied, which has, among others, logistical and commercial advantages.

The cycle preferably comprises a data bus for data transport between two or more of the measuring means, memory means, control means, data input means and/or data output means. The data bus hereby has significant advantages. All components can communicate directly with all other components. Such components comprise for instance the measuring means, first and second control means and data input means or data output means as well as the memory means. This enables transmission of a plurality of control data and other data to the different components via one signal wire. The operating terminal to be described hereinbelow, which can for instance be arranged on the handlebars of the cycle, can also be connected to the data bus for operation of the system. Expanding the electrical system with new components also becomes very simple with this embodiment. All components of the electrical system can be accessed by means of one plug connector for maintenance purposes. It is optionally even possible to embody the data bus system or a part thereof in wireless manner.

The cycle further comprises at least one operating terminal for reading and inputting data. This operating terminal preferably consists of a small box on the handlebars which comprises coupling means and which can be easily disconnected if the cycle is not being used. This unit is connected to the data bus, so that all information from all data systems of the cycle can in principle be read. Such an operating terminal has advantages such as that it can be easily disconnected so that the electrical system no longer functions or is for instance set in a braking position. An operating terminal can further be provided with a unique code, so that the cycle is unusable in the case of theft of the cycle. An operating terminal can further be replaced by a more advanced or an improved unit during the lifespan of the cycle. If desired, the connection to the data bus can be embodied in wireless manner. An advantage hereof is that the operating terminal can be embodied as a wrist model which the rider of the cycle keeps on his person and which makes the cycle unusable if the wireless connection is broken, for instance due to too great a distance between the cycle and the unit. An operating terminal can be coupled to a heart rate meter, or have an integrated heart rate meter functionality, whereby the auxiliary propulsion of the cycle can be related to the heart rate of the rider. A maximum permissible heart rate of 150 can then for instance be adjusted for the rider and, if the heart rate is in danger of exceeding this value, more auxiliary power is supplied.

It is further advantageous that, by means of the data bus, the whole cycle can be controlled from the operating terminal on for instance the handlebars.

A further preferred embodiment provides a cycle wherein the battery comprises two or more parts which are for instance also suitable for a voltage of 6 or 12 volts, which are connected to each other both in parallel and in series, so that the charging can take place in parallel while power supply to the auxiliary propulsion can take place in the series connection. This has for instance the advantage that different battery configurations can be charged using a charger adapted to a standard voltage. It is further possible for instance that different battery configurations can be driven by different types of motor.

A cycle according to the present invention preferably further comprises a tube pivoting device for folding the frame tube double, comprising:
- two first hooking means in a first tube part for hooking into two second hooking means in a second tube part which co-act with the first hooking means,
- releasable fixing means for forcing together the spring means and the first and second hooking means, and
- wherein in closed situation the hooking means and releasable fixing means are situated in the tube in a manner invisible from the outside.

The tube pivoting device preferably comprises at least one hinge comprising a hinge pin for rotating the tube pivoting device. In a further preferred embodiment the tube pivoting device comprises spring means for urging apart the first and second hooking means. Advantages of such a tube pivoting device are that the cycle can be folded up very simply. Using this tube pivoting device a cycle with very large wheels can further be folded up very compactly, since the wheels can be folded very precisely onto one another.

A further preferred embodiment according to the present invention comprises a battery with two or more parts with the same voltage. Such an embodiment of the battery enables charging of a plurality of parts with the same voltage, of for instance 12 volts, using a single transformer unit suitable for charging batteries with such a voltage. Such chargers can hereby be suitable for instance for cycles with batteries of 12, 24, 36 or 48 volts. An advantage hereof is that far fewer different chargers are necessary for different types of cycle making use of batteries with different voltages.

A further embodiment according to the present invention provides a computer link to a data bus of a cycle for transmitting data from and/or to the data bus of the cycle according to the present invention. Such a computer makes it possible to access all the separate components of the electrical system of the cycle and to obtain data therefrom. It is also possible to reprogram such parts.

In a further preferred embodiment the cycle is also provided with axle mounting means, comprising:
- a first part fixedly mounted on the frame, and
- a second part which can be mounted on the first part for displacement from the front to the rear relative to the cycle.

The first part herein preferably has at least one flat side for receiving the second part and the second part has at least one flat side for receiving the first part. A further advantage of such axle mounting means is that no separate chain tensioners are necessary for tensioning the chain. The application of a slot on the underside of the second part as slot for placing the axle of the rear wheel achieves a very simple assembly and disassembly of the rear wheel. This is particularly advantageous if the rear wheel is relatively heavy, for instance through the use of a motor in the rear hub.

A cycle according to the present invention preferably also comprises a device for adjusting the saddle height during riding. Such a device has the advantage that the saddle can be in a low position during standstill, and can be adjusted to an ideal riding position during cycling. This can be carried out in motorized and manual manner.

Further advantages, features and details of the present invention will be further specified with reference to the following figures, wherein:
- figure 1 is a partly cut-away perspective view of an embodiment according to the present invention;
- figure 2 is a partly cut-away perspective view of an aspect of the embodiment according to figure 1;
- figure 3 is a cut-away perspective view of a further aspect of the embodiment according to figure 1;
- figure 4 is a perspective view of a further aspect of the embodiment of figure 1;
- figure 5 is a perspective view of a further aspect of the embodiment according to figure 1;
- figures 6A,6B,6C are perspective views of a further aspect of the embodiment according to figure 1;
- figure 7 is a perspective view of a further preferred embodiment of figure 1;
- figure 8 is a perspective view of a further prefered embodiment of figure 1;
- figures 9-13 show block diagrams of an electrical system of the embodiment of figure 1.

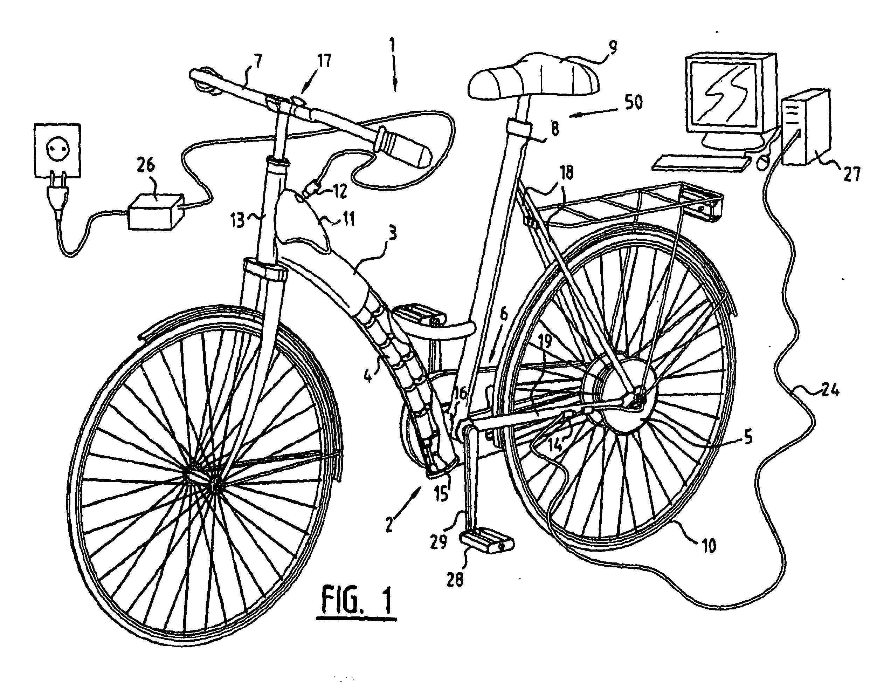

An embodiment according to the present invention (fig. 1) is a cycle 1 comprising a frame 2. Frame 2 comprises main tube or down tube 3, seat tube 8, chain stay 19, seat stay 18, fork column 13 and crankshaft tube 16.

Situated in main tube 3 of the frame, a battery 4 consisting of for instance 20 1.2 volt cells. Main tube 3 serves as housing for the battery which is hereby protected from the outside environment. The package of two rows of cells is enclosed by a thin sleeve-like envelope (not shown). Such an envelope insulates the battery from the tube and makes placing of the cells in the tube very simple. Placing of such a battery in such a frame tube has a particular advantage in that no further housing is required for placing of the battery. The battery is fully protected against influences from the outside world.

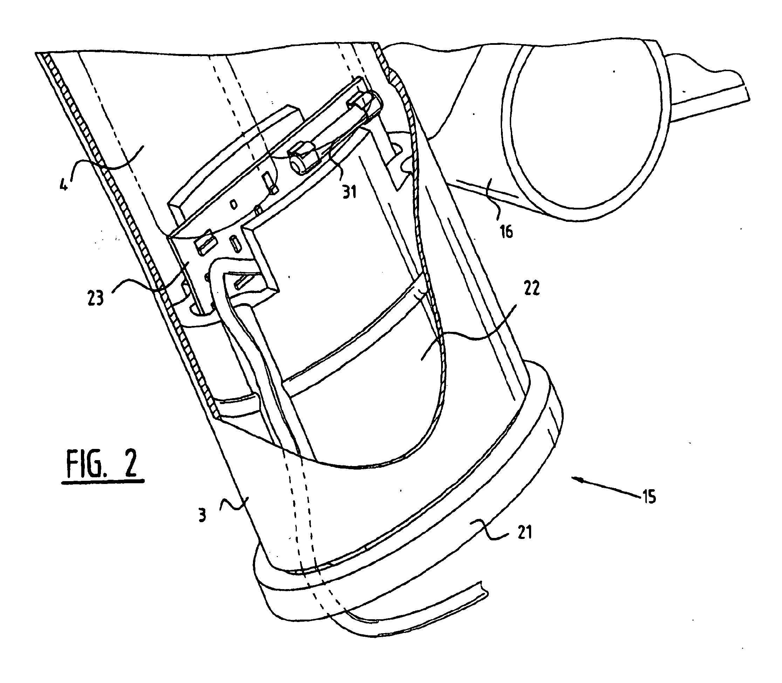

On the upper side or side of main tube 3 is situated a charger connection 11. A power source for charging the battery can be connected to this charger connection 11. On the underside of main tube 3 is situated a closing cover 15 in which are arranged, among other things, battery control means. These are further described with reference to figure 2.

In order to charge the battery or supply power to the cycle for other electrical components there is provided transformer 26 which can supply power to connector unit 11 using plug 12.

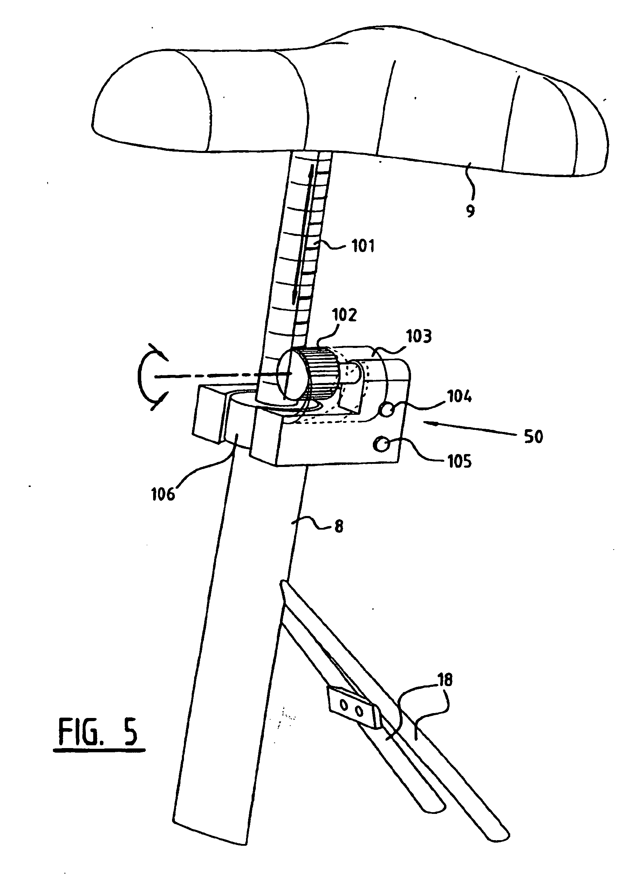

Seat tube 8 is further provided with saddle adjusting means 50 for height adjustment of saddle 9. This part will be further described with reference to figure 5.

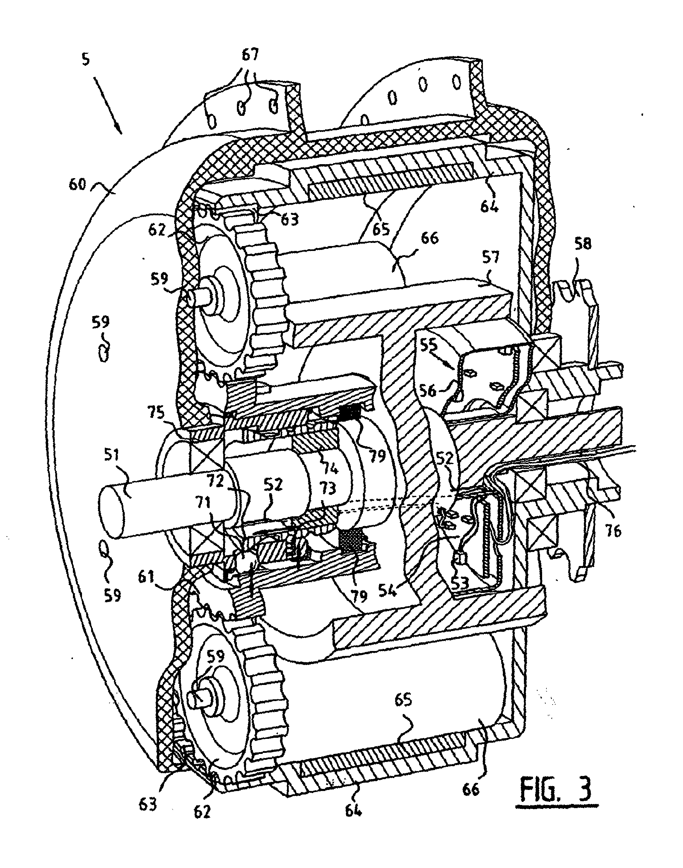

The cycle is further provided with a rear hub 5 in which is situated, among other things, an electric motor. This hub will be further described in combination with figure 3.

The cycle is further provided with pedals 28 and cranks 29. Forces exerted thereon by the rider are transmitted to rear hub 5 via transmission means 6.

A connector 14 is mounted on the chain stay for connecting a data cable 24 to an external computer 27, which can be used to read data from different components of the cycle, which is provided for this purpose with a data bus. The status of the battery can then be determined for instance when it is being serviced. This status can for instance consist of data relating to the number of charging and discharging cycles already carried out, the number of times that the battery temperature has been above or below a determined temperature and the like.

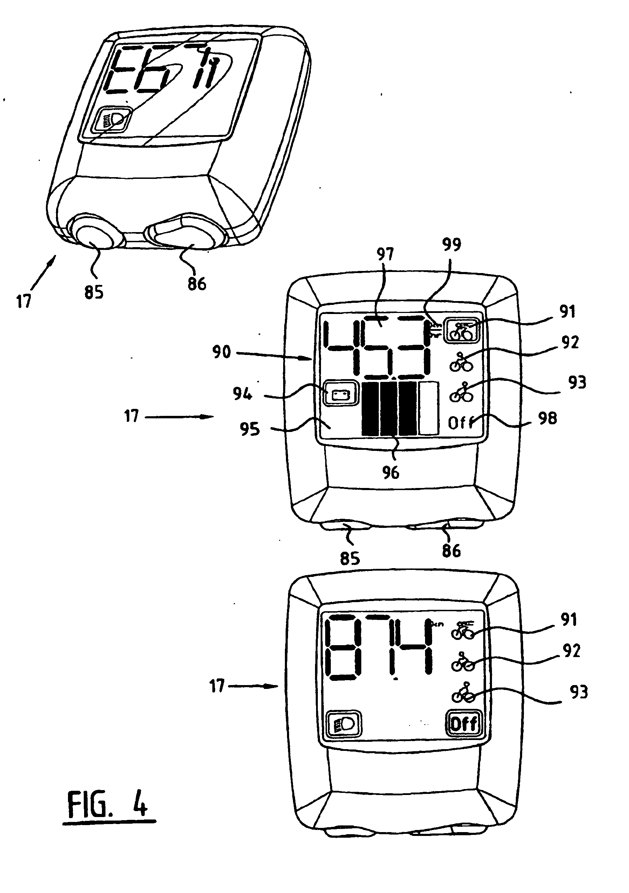

Handlebar 7 is further provided with an operating terminal 17 arranged releasably on the handlebar. This operating terminal will be further described with reference to figure 4.

An electrical wiring system (not shown) mutually connects the electrical components of this cycle. Via this wiring power is supplied to all electrical components from the battery, which is controlled by a power management unit (PMU) to be further described hereinbelow. A data bus cable is further provided for data transfer between the components. This data transfer takes place by means of a so-called data bus structure, to which all electronic components are connected. The data bus cable embodies the data bus structure.

The main tube 3 of the frame is closed on the underside by means of closure 15. A part of the closure can be integrated with the plastic housing of the battery. This closure has various functions. A first function is to close the underside of main tube 3, a further function is to hold an energy management unit or a power management unit (PMU) 23. This PMU provides charging and discharging of the battery.

Accommodation of the battery provides a number of advantages. Such advantages include the battery being well protected in the main tube and cannot be damaged. Failure, exploding of the battery or short-circuiting do not therefore represent a danger for the cyclist. Since the battery is placed firmly in the tube and out of reach of the rider, this results in a high threshold for the rider in reaching the battery or performing hazardous operations in respect of the battery. Placing in the tube is therefore very safe. A further advantage is that the battery is not visible. Placing of the battery in the lower main tube gives the battery a low centre of gravity and therefore contributes to a low centre of gravity of the cycle. In this embodiment the battery is coupled to the PMU. This means that data relating to the battery and to measurements on the battery are stored in the PMU. If the battery is replaced, the charging electronics must also be replaced. It is possible here to reset or to reprogram a PMU for use with a new battery. A further advantage of placing the battery in the main tube is that it cannot be stolen easily. In the case of the battery becoming heated due to charging or discharging, the frame also serves as cooling body. According to the present invention a battery can for instance also be arranged in the seat tube as well as in the main tube. The battery is preferably further enclosed by a thin plastic sleeve for holding together the separate elements.

In this embodiment the battery is embodied as two strands of 10 cells with a capacity of 6000-9500, preferably 8000 mAH. Use is made herein of D-size and NiMH cells. Such cells are charged with a constant charging current, wherein the brand, type and temperature specify preconditions in respect of the maximum charging current. A battery management system (BMS) is a component of the PMU. In order to be able to achieve a maximal lifespan of the batteries, the BMS manages the discharging process of the battery, manages the charging process, determines a display on a battery indicator on the operating terminal on the handlebar, and collects data for later evaluation, such as for instance the number of (dis)charging cycles and the total power supplied. The BMS ends the charging process if the voltage and the temperature of the battery rise too high. Such data is measured per strand of 10 cells. The batteries are coupled per strand of 10 cells for this purpose, among others.

Voltage, current and temperature of the separate strands of battery cells are measured during the charging process. The PMU processor determines whether the charging current should be switched off on the basis of the criteria -dV/dt, dT/dT, minimum/maximum cell temperature, BMS data and/or data from a timer. The charging process can herein be stopped at any moment by the PMU processor. The charger is an external constant source of current, which is important for charging an NiMH battery.

In addition to charging the battery, the PMU has the following functionality:
- Monitoring the voltage of the battery per strand of 10 cells.
- Monitoring the temperature of the battery, wherein this temperature is measured per strand.
- Determining the charging state of the batteries by means of a coulomb measurement.
- Actuating the lighting of the cycle, wherein six volts for a standard cycle lamp is provided by means of variable pulse width modulation (PWM).
- Preparing the display of data on the operating terminal on the handlebar, such as for instance the battery capacity as a percentage.
   The PMU electronics are coupled to a specific battery. For this purpose these electronics comprise specific components for the charging process. If the battery is changed, the charging process is also changed. In order to prevent hazardous situations, it is therefore efficient to replace the electronics and the batteries simultaneously. It is optionally possible herein to modify the electronics to the new battery. In the PMU is arranged an EEPROM for storing data relating to the battery. Data requiring storage in this EEPROM is for instance;
- the number of charging cycles,
- the total number of Ah supplied,
- supply time in days since for instance the first actual use,
- the average use in for instance km/day,
- the total number of kilometres travelled,
- average speed,
- the average pedalling torque,
- the average number of km/charging cycles,
- the maximum (dis)charging current,
- the average discharging until charging takes place again.

Such data is for instance important in helping to determine which variables influence the lifespan of the battery or in determining whether the rider of the cycle has taken proper care of the battery in respect of possible warranty rights.

Using a battery indicator the current charging state of the battery will be made known to the rider of the cycle in a visual manner. Data for such an indication are collected, processed and stored in the processor of the PMU. Such data will be transferred to the operating terminal on the handlebar via the data bus to be described below. An accurate indication requires:
- continuous measurement of the input and output current of the battery (the so-called coulomb measurement),
- correction for an internal self-discharge of the battery,
- comparing of the battery "full" voltage (dV/dt) to an internal calculation and correction therefor,
- comparing of the battery "empty" voltage measurement to an internal measurement and recalculating capacity. Such a measurement provides among other things information about ageing of the battery, keeping track of the number of charging cycles and measuring the cell temperature.

The battery will not always be discharged completely. Complete discharge must be prevented by the BMS. The PMU will for instance refuse current to the motor at a residual charge of 10%. Nor will the battery be charged to 100% in each charging cycle. The lifespan of the battery can hereby be considerably lengthened.

An accurate BMS is applied so as to be able to employ the above stated method. A monitoring mechanism is applied to protect the battery against an incorrect indication of the BMS. If discharging of the battery must for instance be stopped at 15% residual capacitance, and the BMS indicates that more residual charge is available than 15% while in reality the battery is almost empty, an indication of the cell voltage (for instance lower than 0.9 volt/cell) will indicate that the BMS has carried out an incorrect measurement and the PMU can correct.

Three functions are substantially incorporated in hub 5 (fig. 3). These three functions are a drive function of a motor and a transmission function of a planetary system and a control unit 55 in the form of a motor management unit (MMU). Further provided are torque measuring means 52 for measuring the pedalling torque produced by the rider of the cycle. These torque measuring means are embodied by small strain gauges arranged on the underside or the side in the horizontal surface of axle 51. The axle is deformed slightly by the pedalling torque, whereby strain gauges 52 are likewise deformed slightly. A signal resulting from this deformation is supplied to a signal amplifier 53, which is arranged on a printed circuit board 54 of motor management unit 55 which is arranged inside a housing 56 of the motor management unit.

Further arranged in the hub is a brushless three-phase motor suitable for 24 volts. This motor is formed by magnets 65 and coils 66. Coils 66 are mounted on data bus 57 which is fixedly connected to axle 51. Magnets 65 are arranged in a rotor 64, which is connected on one side to chain sprocket 58 and on the other to satellite wheel 63 of the planetary system.

Satellite wheel 63 connected to rotor 64 forms the outer ring of the planetary system. The inner ring of the planetary system is formed by sun wheel 61. Arranged therebetween are six planet wheels 62 which are mounted in hub wall 60 by means of bearings 59.

The planetary system can be switched on and switched off, whereby two drive states are available. To switch the planetary system on and off use is made of blocking ball 71. This blocking ball can be released or urged into a groove of the sun wheel by slidable bus 72, which can be set in two positions. By means of spring and ball 73 the slidable bus 72 is positioned by means of two grooves. A solenoid 74 supplies the energy required to displace the slidable bus 72.

In order to enable free running of the wheel the hub is provided with a freewheel ratchet with hairpin spring 79, which is a known component. Data bus 75 connects the sun wheel to wall 60 of the hub.

The motor must be provided with energy and data from for instance the PMU. It is necessary for this purpose that two wires are fed for the power provision, as well as a wire for the data provision forming part of the data bus structure. These three wires are combined in a round cable with a diameter of for instance about 8.2 mm, in order to lead these three wires to the inside of the hub. In order to realize a reliable, durable throughfeed of the wires, a groove 81 is arranged on the underside of the axle (in mounted state), for passage of the three wires. The three wires are herein not arranged in the groove in the round cable of about 8.2 mm, but as three separate wires which can be placed adjacently of each other in the groove. These wires are guided out of the axle between the hub and the frame (the rear fork). Compared to existing embodiments, wherein wires exit the axle at the end of the axle, this has the advantage that wire breakage or wire damage can occur much less easily. It is in fact relatively common for a wire protruding from the end of an axle to be damaged by human action or by for instance the cycle falling on the axle end.

In order to allow sufficient space for the wires in the axle, this latter is of relatively large diameter, for instance 15 mm. A bearing which mounts the axle relative to the hub, inside which the cables are fed through, therefore has an inner diameter of about 15 mm. A slightly larger or smaller dimensioning can also be employed. This embodiment of the wire insertion to the motor has the advantages for instance that the wiring is practically invisible, that the wiring is well protected against the cycle falling and vandalism and/or that the construction is robust, whereby it is durable, which makes a long lifespan possible.

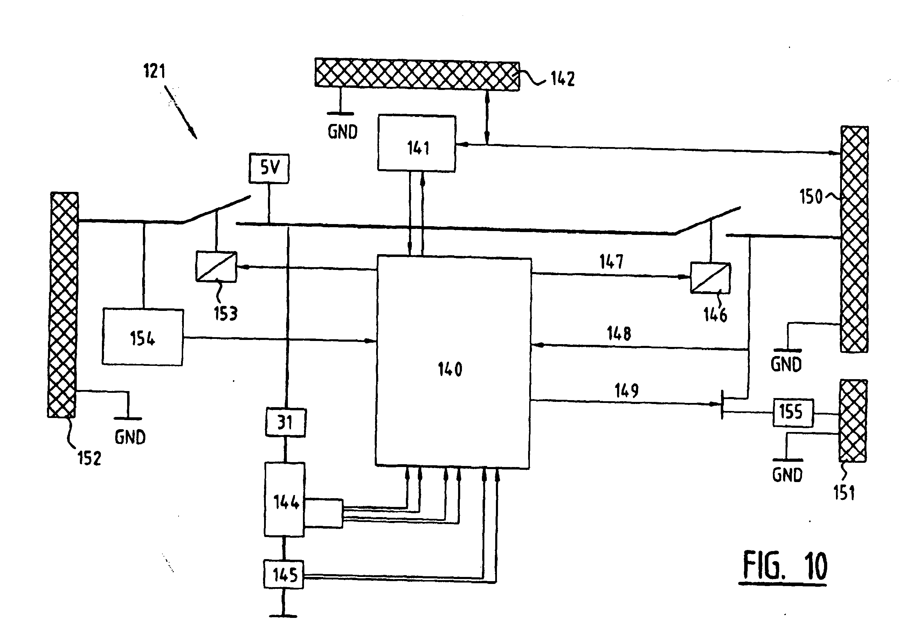

The operation of the motor will be further explained with reference to figure 10.

Figure 4 shows an operating terminal 17 with a display screen 90 and two control buttons 85 and 86. Three digits can be displayed in the display screen, for instance for the speed or distance travelled. This takes place with alphanumeric part 97. Three power modes 91,92,93 can further be selected, as well as an OFF-position 98. Residual battery charge bars 96 indicate the residual charge of the battery. Using light-indicating part 95 the lighting can be switched and an indication is given as to whether the lighting is on. Part 94 can also be applied for indicating whether the battery is being charged or discharged.

Surprisingly, tests have shown that a cycle according to the above described embodiment was capable of a much better performance than conventional cycles with electrical (auxiliary) drive. It has been found that cycles with a comparable battery charge achieve a much greater radius of action than cycles where the power management system was not present in this manner and measurement of the pedalling force and actuation of the motor was carried out using conventional means.

A further advantage of a cycle according to the present invention is that, when used without auxiliary propulsion, it does not require noticeably more pedalling force than a conventional cycle without auxiliary motor. This is particularly advantageous in the unlikely event the batteries are insufficiently charged.

In a further embodiment (fig. 5) the cycle is preferably provided with seat tube 8 which is supported by the seat stay 18. Saddle pillar 101 is placed in seat tube 8. This saddle pillar 101 is disposed movably for driving by toothed wheel 102 and is also driven by motor 103. Using buttons 104,105, the saddle can be moved manually up and downward. An object of this embodiment is that the saddle can be adjusted electrically up and downward. This electrical adjusting unit is preferably provided with a data bus connection so that the main control can also adjust the saddle automatically on the basis of further variables of the cycle. It may for instance be desirable for a rider to make use of a lower saddle position when mounting and dismounting, and of a higher saddle position when at speed.

This device enables the saddle to be adjusted up and downward subject to the speed. It is also possible that the height of the saddle is controlled on the basis of the pedalling force produced by the rider. An electric saddle adjusting drive is shown in this figure by means of a toothed wheel. It is also possible to make the height-adjustment of the cycle by means of a horizontal adjusting screw, wherein horizontal ring 106 is for instance driven. Further provided is a manual height-adjustment of the saddle by means of a spring permanently pushing the saddle upward and a blocking/unblocking mechanism which is operated manually.

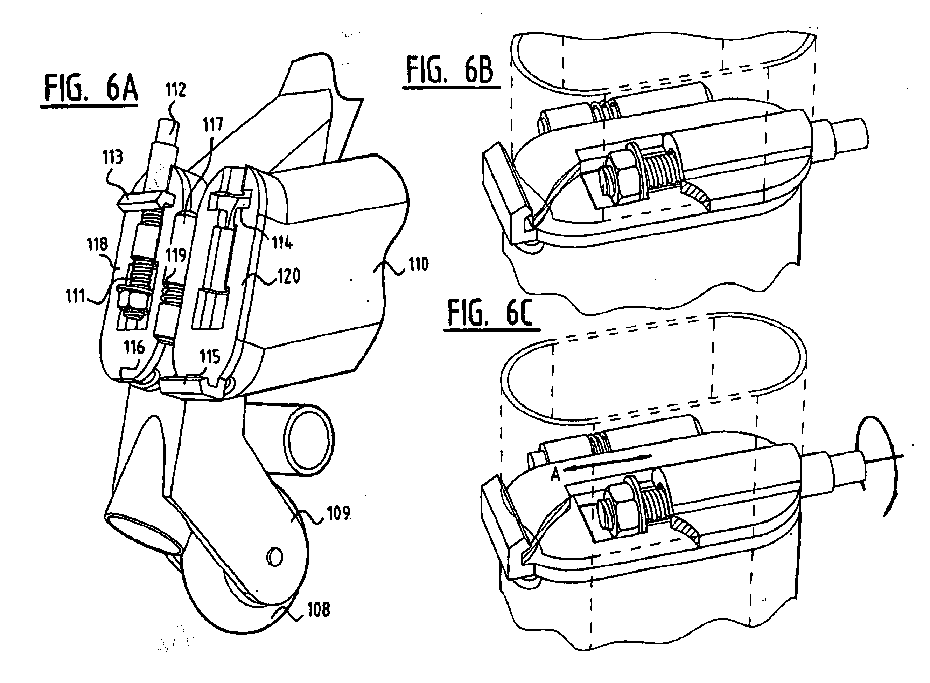

A further preferred embodiment (fig. 6) provides a hinge for making a frame tube foldable. A frame tube 110 is divided into two parts transversely or at an angle. A coupling plate 118,120 is coupled to each of these two parts. These plates are provided with hooks 113,115 which are placed over hook-in edges 114,116 if both tube parts are used mutually in line. Hinge 117 is provided round the hinge pin with a compression spring 119 which translates the two frame tubes relative to each other. The tubes are herein displaced just so far apart that the hooking means can be moved over the hook-in edges in order to fold up the tube, and the hinge part is further provided with fixing bolt 111 which can be rotated using pin 112. A part which can be handled may be arranged for this purpose on pin 112. It is also possible to embody bolt 111 using for instance a bayonet fitting mechanism.

The hinge according to this embodiment is further provided with wheel support 109 comprising support wheel 108. An advantage of this support wheel is that the cycle with this hinge can rest on the support wheel after being folded. This has the advantage that a folded cycle is easier to transport and can for instance be placed in stable manner.

If the hinge is closed, the spring will be compressed by tightening the bolt 111 and the hooking means will be pressed fixedly onto the edges corresponding therewith. If the angle is relatively small, for instance 38, the sectional plane of the frame tube becomes relatively large, whereby the hooking means are relatively far removed from each other, which for instance has the advantages that, owing to a greater distance of the hooks, the couple that is receivable remains relatively low, and the closure is loaded less.

This advantage becomes greater if the tube has a larger diameter. The tube in figure 6 is therefore very suitable. Such a tube has the further advantage that there is much internal space for placing the components of the hinge point, which is improved further by an optionally small angle. A further advantage of this hinge direction is an attractive appearance, since the presence of a hinge point can hardly be seen because only the tightening pin 112 is visible. A further advantage of a wholly internal hinge point is that it does not have any sharp external parts on which for instance clothing can catch or which can injure the rider. Since the rotation point of the hinge is free of forces in closed position and serves to hold together the frame in the folded state, the closed frame is free of play. Because the lower hooking means are situated wholly in the tensile region of the divided tube, the effective section factor is at least lower than that of the tube itself. By arranging no hinge pins, this embodiment can also be used for a dividable cycle or a dividable frame.

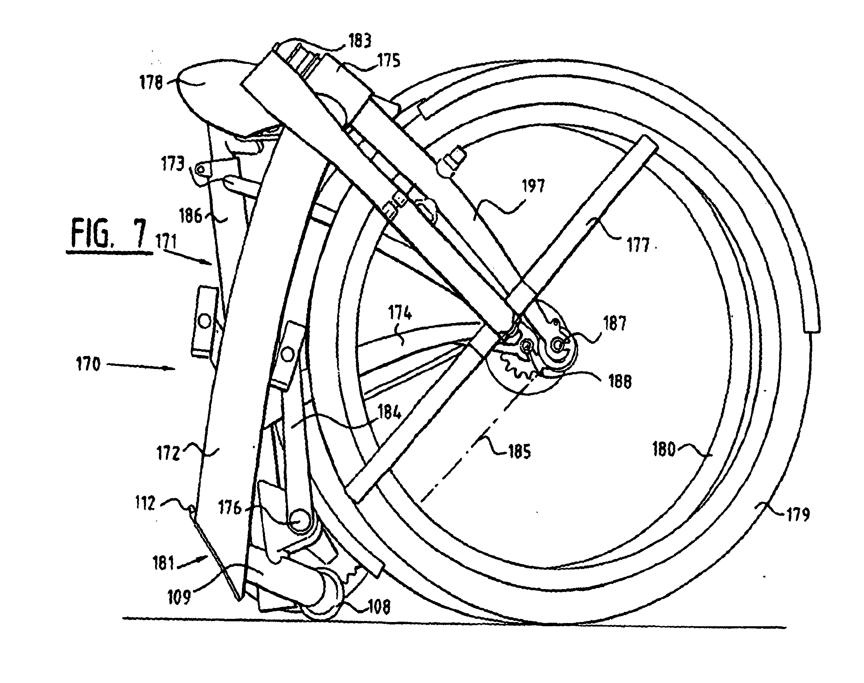

Figure 7 shows a folding cycle 170 comprising a folding frame 171. The folding frame is foldable about hinge 181, which is similar to the hinge of figure 6. Frame 171 comprises seat tube 186, down tube or main tube 172, seat stay 173, chain stay 174 and fork column 175. The frame is foldable in that main or down tube 172 is pivotable at hinge 181. Steering pin 187 is pivotable by means of hinge 183. The cycle is further provided with front wheel 179 and rear wheel 180 and saddle 178. On the underside of seat tube 186, close to crankshaft 176, the cycle is provided with fixing bracket 109, to which is fixed support wheel 108. This support wheel 108 serves as third point of support for the cycles in folded situation, wherein front wheel 179 and rear wheel 180 serve as first and second points of support. The cycle is further provided with chain 185 for transmitting pedalling force from the crankshaft to rear wheel 180. In order to enable control of a hinge device 181, fixing pin 112 can be provided with a handle of some sort.

Folding of the cycle is started by screwing out the fixing bolt of the hinge. Coupling plate 118 can hereby displace relative to coupling plate 118, whereby hooking means 113 and 115 are released. An intermediate position hereof can be seen in figure 6B. Figure 6C shows the placing A of coupling plates 118, 120 in fully closed position. Once the hinge has been fully opened by means of turning pin 112, the tube can be folded double. It will hereby be possible to fold the front wheel against the rear wheel. As shown, the axles 187,188 of respectively the front wheel and the rear wheel herein come to lie directly adjacently of each other. The cycle can then be tilted into the position shown in figure 7, whereby in addition to resting on the front wheel and the rear wheel the cycle will also rest on support wheel 108.

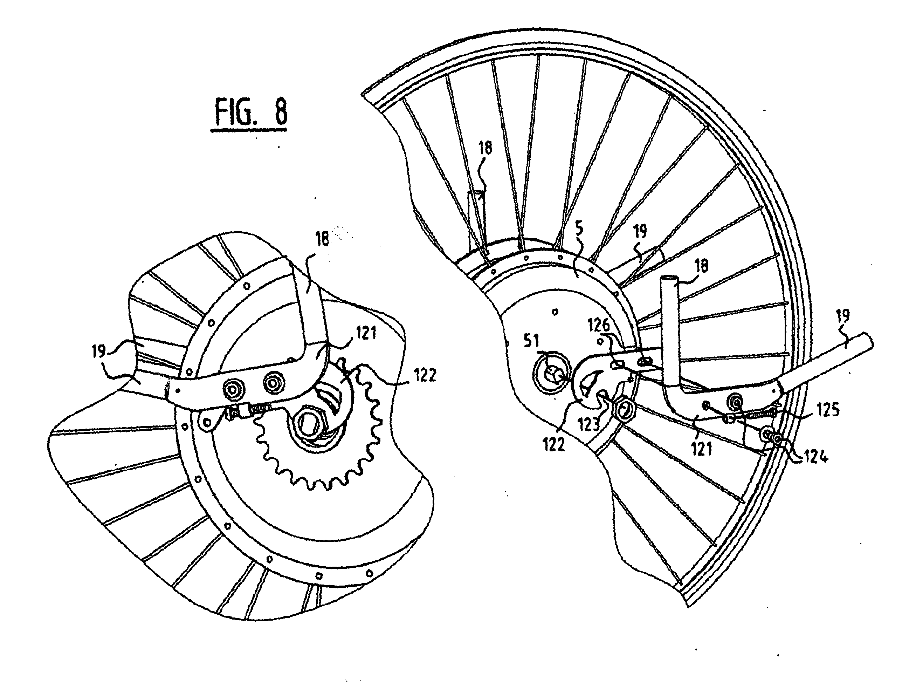

The embodiment of figure 8 is very suitable for constructing a cycle or electrically propelled cycle with large wheels which, despite the large wheels, still fits into a relatively small rectangular frame. Wheel dimensions of 22 inches, 24 inches or 26 inches can be envisaged here, wherein 24 inches is preferable. When such a cycle is folded, it fits into a rectangular frame of 735 mm by 610 mm. Advantages of such a foldable cycle are that the relatively large wheels have a low rolling resistance, and are much more comfortable to ride than for instance 16-inch wheels of comparable foldable cycles. It is further the case that the larger the wheel, the more resilient it is, which is favourable for the comfort. A further advantage is that large wheels require a smaller transmission ratio than small wheels. A further advantage of a foldable cycle with large wheels is that it has the appearance of a normal cycle, which increases the acceptance of such a cycle on the market.

A further preferred embodiment (fig. 8) provides movable rear pads 122 for simple mounting of the rear wheel and to make chain tensioners unnecessary. Between the seat stay and the chain stay is arranged a horizontal coupling part 121 in which two holes are drilled. The separate pads 122 are fastened to the fixed connecting part 121 using two bolts 124. Because the fixing holes 126 of the separate pads are elongate, these separate pads can be fixed in displaceable manner. Using adjusting bolt 125, the rear pads 122 can be positioned from the front to the rear, as seen in the direction of travel of the cycle. On the underside of the pads are arranged openings 123 having two parallel straight sides. These openings 123 serve for placing of rear axle 51 of the cycle. Because these openings are open to the underside, the wheel can be removed simply by for instance lifting the cycle. This is advantageous if this is a cycle with a heavy rear wheel, which is the case with a cycle with a motor in the rear hub, whereby the rear wheel is relatively heavy.

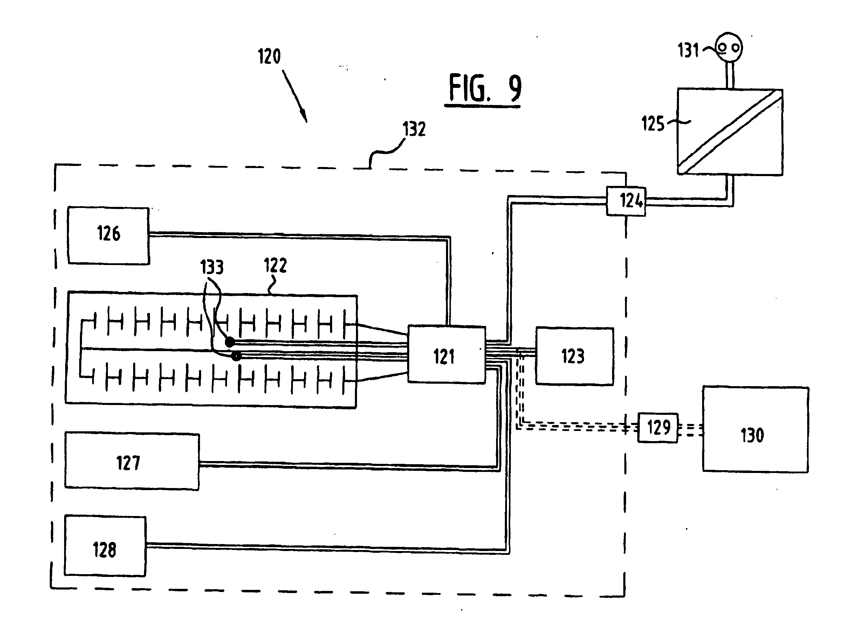

A block diagram (fig. 9) shows an electrical system for a cycle of for instance figure 1. Situated centrally in the system is the power management unit 121 (PMU). This power management unit comprises the battery management system as specified above. PMU 121 is connected to battery 122 for charging thereof and taking current therefrom. It can be seen that two strands of batteries can be separately charged or discharged. Temperature sensors 133 are further arranged in each battery strand. Motor management unit 123 is also connected to the PMU. The front lamp 127 and rear lamp 128 are further connected to the PMU by means of current supply wires. The operating terminal 126 which can be placed on the handlebar is likewise connected to the PMU. The power supply connector 124, which is placed on the cycle in connector unit 11 at the top of the main tube of the frame, is connected to the PMU and is used to connect transformer unit 125 to the PMU. Energy from for instance the general mains supply 131 is used to charge the battery. An external computer 130 can also be connected to the electrical system of the cycle. Use is made for this purpose of for instance an RS232 connection of a computer. A converting unit 129 provides conversion of the single-wire data bus connection of the cycle to the RS232 computer input. Use can be made of the power supply from the battery of the cycle to power converter 129.

Computer 130 can read data from all memories present in the cycle in for instance the MMU, PMU or BMS. The computer can also be used to reprogram program code of these modules. For example the percentage of auxiliary propulsion by the electric motor in relation to the amount of pedalling force of the rider can hereby be changed in a program. Using the computer it is further possible to perform an optional calibration on the electrical system. The data traffic on the data bus of the cycle can also be monitored by the computer.

Figure 10 shows in greater detail the operation of PMU 121. Situated centrally is control unit 140. Control unit 140 receives measurements from battery 144 relating to the temperature T and voltage V. Control unit 140 receives the data relating to the charging current from the current measuring unit 145. Provided for safety purposes is fuse 31, which is arranged in the main current wire of the battery. The fuse is situated in the wire. The part between the battery and the fuse is carefully insulated. The insulation can optionally be less strong after the fuse. In addition, there is a module 154 for detecting the charging of the battery. A relay 153 actuated from control unit 140 serves to start and finish the charging. Control unit 140 communicates data 141 to the operating terminal. A further relay 146, which is actuated from the control unit by means of signal 147, switches on the motor management unit. A measured voltage 148 is indicated and fed to control unit 140. Control unit 140 further supplies a power supply 149 of six volts by means of pulse width modulation for the purpose of lighting the cycle. The power supply is provided with a safety device 155 for protection thereof. For the purpose of the foregoing, PMU 121 is provided with connectors 142, 150, 151, 152.

The BMS controls the charging and discharging of the battery. Below will be described which steps are performed by the BMS in specific situations.

During charging of the battery for the first time the BMS detects whether the charger is connected. For a determined value of dV/dt or dT/dt (which values are predetermined on the basis of the particular specifications of a battery) the BMS opens a switch in order to end charging of the battery. A normal charging process will be ended if the set dV/dt, dT/dt and/or the maximum temperature of the battery is reached. After charging, the charge meter of the BMS will be set to 100%.

When the cycle is not being used, the battery can be discharged by self-discharge or by power-consuming units connected to the battery, such as for instance the BMS itself or a connected operating terminal on the handlebar. The BMS calculates the charge of the battery from predetermined self-discharging information, a measured temperature of the battery and information about the power-consuming units. If the charged state of the battery drops below 70%, the BMS will switch the relay to the charger once again in order to recharge. The BMS will keep track of the charging process using an Ah-counter. Charging of the battery will stop when the charge amounts to 95% of the maximum battery charge. This means that the battery will never be charged the whole 100%, although the rider of the cycle will get to see 100% charge on the operating terminal. The battery is never fully charged to 100% in order to increase the lifespan.

In a situation where the cycle is being used, the BMS will measure the temperature of the battery. On the basis of this measurement the BMS calculates the maximum discharge current for the battery at that moment and communicates this to the MMU. The battery will be discharged during cycling. Using the Ah-counter, the BMS measures the current amount of charge in the battery at any moment. If the battery charge drops below 10% of the maximum, the BMS will communicate to the MMU that the maximal current must be limited. At a charge lower than 5% the BMS will communicate to the MMU that the motor must be switched off, and the power supply from the battery to the motor will be physically broken off by opening a relay switch. In the situation where the battery is being charged, the BMS will detect that the charger is connected. If the battery charge is lower than 70% of the maximum, the battery will be charged. The charge of the battery will be determined during charging by means of the Ah-counter. The BMS will stop the charging when the charge of the battery becomes greater than 95%.

In a situation wherein the cycle is being used, where the above stated limit values have been reached, the BMS will generate a signal to the MNU that the motor must be switched off. Such a situation can occur if the BMS has measured that the charge of the battery is over 5%, while it is in fact below 5%; the voltage difference between the two arrays of battery cells is too large (imbalance); the temperature of the battery is too high or too low; or the battery is defective. The moment the BMS determines that the charge meter is no longer correct, or that both strands of the battery are out of balance, the BMS will equalize the battery. If ambient temperatures cause too high or low a temperature of the battery, the BMS will not allow further use of the battery as long as these conditions persist. If the BMS determines that the battery is defective, this will be passed on to the rider by means of an error message on the operating terminal. In this case the auxiliary propulsion will no longer operate.

It may occur that the battery must be equalized in order to achieve a proper balance between the strands of cells or to re-calibrate the charge meter. Three criteria for beginning equalization are (1) that the battery has been charged twenty times without equalization, (2) that the BMS has measured too large a voltage difference between the two strands during a normal operation of the system, (3) that a minimum voltage level is reached during normal operation. A method used for equalizing the battery is not long enough to carry out a normal charging cycle until the voltage or the temperature have reached (predetermined value for) dV/dt or dT/dt. Charging will be stopped before full charging is achieved if the battery is (too cold or) too hot, and will start again when the temperature has reached an acceptable value. If the battery is too cold, charging will not start. The charge meter of the BMS will be set to 100% after the equalizing cycle. The nominal capacity of the battery is used to determine the charging state. After a period of use the actual capacity will however become lower than the nominal capacity under the influence of "ageing" of the battery. The capacity of the BMS must be recalibrated to prevent the battery from being discharged too much because of this smaller actual capacity. Such a re-calibration is carried out as follows. The BMS retains the number of equalizing cycles performed after a minimum voltage has been reached. The BMS infers herefrom that the actual battery capacity has decreased when three equalizing cycles have (successively) taken place. The BMS will then reduce the predetermined capacity by 5%. The battery can be replaced when the BMS has reduced the actual capacity of the battery to less than 70% of the original nominal capacity. This will be indicated by means of an error message in the display screen of an operating terminal.

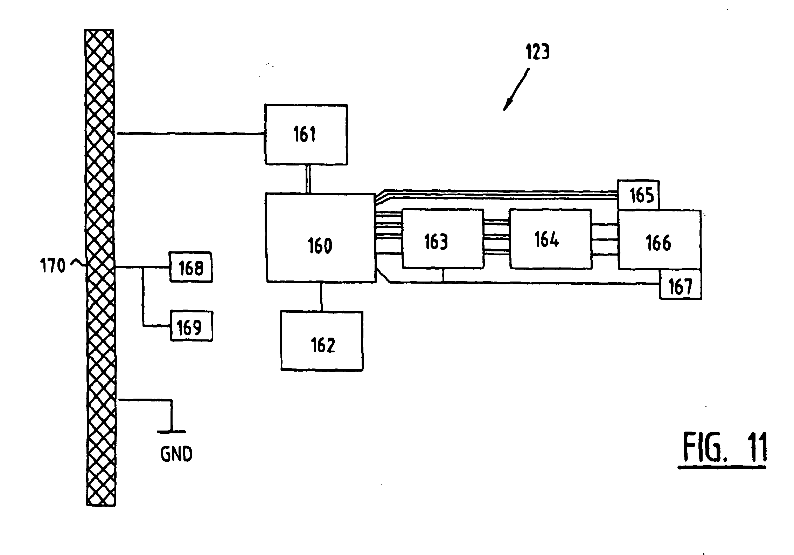

The connector 170 (fig. 11) is connected to connector 150 (fig. 10). This connector consists of three wires, a +24 volts, a 0 volt earth and a wire for the data bus. The data bus wire is connected to communication module 161 which is connected through to control unit 160. Measuring means 162 for measuring the muscular driving force of the rider of the cycle are also connected to control unit 160. On the basis of data from communication means 161 and measuring means 162, the control unit determines how much power has to be supplied by the motor. For this purpose the control unit 160 also receives data from three Hall-sensors of the brushless three-phase motor 166. Also provided are current measuring means 167 connected to control unit 160 and bridge actuating means 163. Bridge actuating means 163 actuate a so-called H-bridge comprising six MOS-FET transistors. Each FET is an N-FET and can be actuated separately so that an optimal riding comfort can be realized. The H-bridge 164 is connected to the brushless three-phase motor 166.

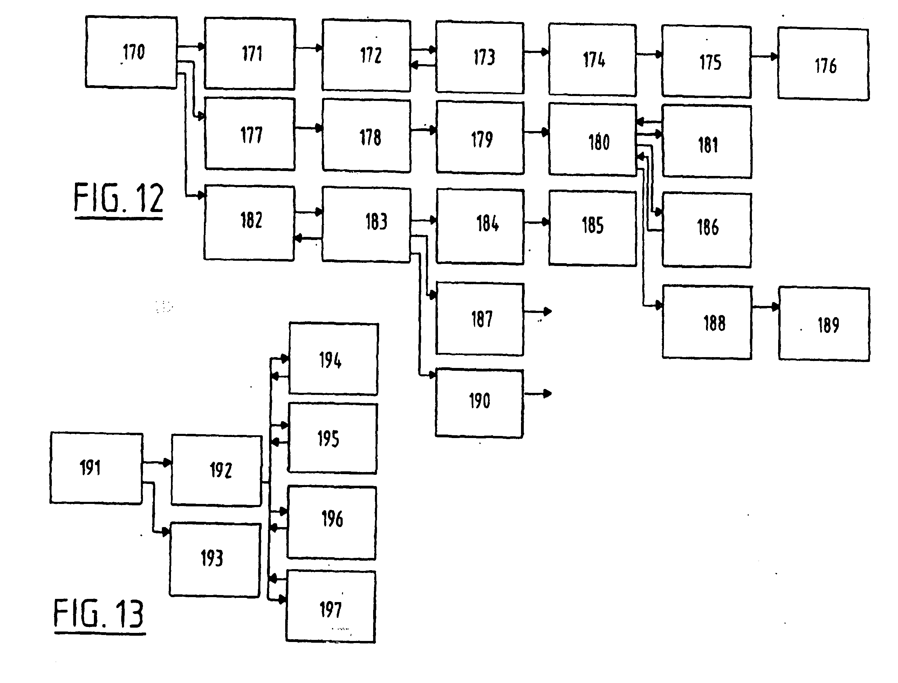

If the cycle is connected to a computer located at a cycle repairer or dealer, these latter will make use of a method for carrying out maintenance on a cycle. He has available for this purpose a software program with a number of possibilities (fig. 12). In step 198 three options which the dealer can choose are displayed in main screen 198 of the computer program. Option 1, "make ready to ride and deliver" refers the dealer to step 171, wherein on the screen is displayed that the cycle must be connected to the computer, and he will carry out this step. After connecting the cycle to the computer, the program in 172 will request input of for instance the postal code and the house number of the owner of the cycle. In step 173 the screen then displays data such as the "postal code and the house number", the "date of sale" and the "total consumed capacity of the battery". This data is verified by the software or read from the electronics situated in the cycle. In the case of the data "accumulated battery use", the computer will seek contact with the PMU via the data bus, which PMU will supply this data to the computer. In the following step 174 "first name and name of the owner" are input, whereafter a guarantee certificate can be printed and optionally faxed in step 175. There then follows in step 176 a message that the procedure has been carried out successfully, and the dealer is returned to the main menu.

From main menu 198 a second choice leads to the option "pit-stop, malfunction and repair". In step 177 is herein displayed on the screen that the cycle has to be connected to the computer. In step 178 the computer then carries out tests, including self-tests relating to the PMU, MMU and the operating terminal. In step 197 is then displayed whether or not a malfunction has been found, and the data from the cycle are displayed such as "postal code and house number of the owner", "number of kilometres" and "accumulated battery use". In step 180 possible actions are then shown, such as "replace operating terminal", "add operating terminal" or "replace battery". Since the operating terminal can be provided with a unique security code, without which the electronics of the cycle will not operate, it is important that the correct data of the correct operating terminal are stored in the cycle. If a plurality of operating terminals must be usable with the cycle, it is therefore possible to program additional data into the cycle. In step 181 the existing operating terminal is now placed on the cycle and it is indicated that this should be signed off on this cycle. In addition to step 181, the dealer is returned to step 180, whereafter he can select the option "add operating terminal". In step 186 a second control display is connected to the data bus of the cycle and it is indicated that this operating terminal can be added. After step 186 the dealer is returned to step 180, where he can select the option "replace battery". If the dealer selects the option "replace battery", data of the existing battery are loaded into the PC in step 188. A progress indicator or a message 'please wait' is for instance displayed here. In step 189 the computer screen then shows that the battery can be replaced, whereafter 'continue' can be clicked. The battery management system is reprogrammed for the data of the new battery or replaced together with the battery.

From main menu 198 a further option is open, this being "cycle propulsion software and settings". In step 182 the computer screen then shows that the cycle must be connected to the computer. After connecting the cycle to the computer, the dealer can choose from three menu options in step 183. After selecting the first menu-option "amend cycle owner data", new data relating to the owner of the cycle can be input in step 184. In step 185 this data is stored in the cycle and optionally in a file on the computer. The options menu of step 183 will then be displayed on the computer screen. A second option from the menu is "read software version cycle propulsion". After selecting this menu option the software version of the cycle propulsion is displayed in the computer screen in step 187. The dealer is then returned to the menu in step 183, where a third option is "load new software cycle propulsion in cycle". After selecting this menu option, a new software version is chosen and/or downloaded into the cycle in step 190. New software versions can for instance take into account different ratios between muscle power and motor power, or can for instance take into account different parameters such as the heart rate or wind speed and the like, as already described above.

If the data bus of the cycle is connected to the computer and the software of the computer is situated in the main menu, a further option is available. This is the option for displaying data of the cycle. In step 192 a component of the cycle can be designated. If the component "customer card" is for instance designated, data relating to the cycle and the owner are shown in a subsequent step 194. It is also possible to envisage here "postal code", "house number" and "number of kilometres" or "accumulated battery use". It is further possible in step 194 to return to 192. If the operating terminal is designated in 192, the data of the signed-on operating terminals are shown in step 195. Step 195 further allows clicking back to step 192. If the battery is clicked in step 192, the data of the battery, such as for instance the "accumulated battery use" up to that moment, is shown in step 196. After opting to return to step 192, it is for instance still possible to select the motor in 192, whereafter in step 197 data relating to the type of motor or the version of the software in the motor management system is displayed on the screen of the computer. It is then possible to click back to step 192. Finally in this embodiment, there is the option to exit the program from main menu 191, whereafter in step 193 ('do you want to exit the program') it is possible to opt for 'YES' or 'NO, RETURN TO MAIN MENU'.

## Claims

1. Cycle (1), comprising:
- a frame (2),
- one or more wheels arranged rotatably on the frame (2) via wheel axles,
- drive means for driving the wheels wholly or partly with human force via transmission means (6), an auxiliary propulsion forming part of the drive means,
- a power source including a battery (4) arranged in a main tube (3) of the frame, said main tube (3) comprising a charger connection (11),
- measuring means (52) for measuring the muscular driving force of the rider and control means (55) for controlling the power of auxiliary propulsion with respect to the measured muscular power of the rider; and
- an external charging device (26) to be coupled via the charger connection (11) to the battery (4) for charging the battery (4) arranged in the main tube (3) of the frame, wherein the power source and/or the auxiliary propulsion are arranged in or on the cycle (1) in a manner which is as invisible as possible from the outside, wherein the battery (4) is arranged in the main tube (3) of the frame, and said auxiliary propulsion comprising an electric hub motor (5).

2. Cycle as claimed in claim 1, wherein battery (4) control means for charging the battery are arranged in the frame (2).

3. Cycle as claimed in claim 2, wherein the battery control means are arranged in the frame (2) together with the battery (4) and a closing member (15) for closing the main tube (3).

4. Cycle as claimed in claim 2 or 3, wherein the battery control means are also adapted to control discharge of the battery (4).

5. Cycle as claimed in any of claims 1-4, provided with a second charging device which has dimensions and weight such that it is easily carried by the rider.

6. Cycle as claimed in any of claims 1-5, wherein the electric hub motor (5) is provided with a transmission with two or more gears, which transmission preferably comprises one or more planetary systems.

7. Cycle as claimed in one or more of the foregoing claims, provided with a groove (81) in the axle in which the electric hub motor (5) is arranged, which groove (81) extends at least from the electric hub motor to the frame (2) in order to feed through the wire from the hub motor to the inside of the frame.

8. Cycle as claimed in one or more of the foregoing claims, provided with pulse width modulating means for power supply to electrical parts at a lower voltage than the battery (4), for instance 6 volts for the voltage of the lighting.

9. Cycle as claimed in one or more of the foregoing claims, provided with a data bus (57) connected to measuring means, first control means (160), second control means, data input means and/or data output means.

10. Cycle as claimed in claim 9, provided with a connector (14) for connecting thereto an external computer (27) and/or service terminal so as to facilitate maintenance.

11. Cycle as claimed in one or more of the foregoing claims, comprising a releasable and/or wireless operating terminal (17) for blocking/unblocking the drive means and other functions of the cycle.

12. Cycle as claimed in one or more of the foregoing claims, wherein the battery (4) comprises two or more parts, for instance each suitable for a voltage of 6 or 12 volts, which are connected to each other both in parallel and in series to allow charging to take place in parallel while power supply to the auxiliary propulsion can take place in series connection.

13. Cycle as claimed in one or more of the claims 1-12, further comprising switching means for switching the motor in a dynamo for generating electrical energy.

14. Cycle as claimed in one or more of the foregoing claims, further comprising a wire throughfeed through a groove (81) in an axle (51).

15. Cycle as claimed in claim 14, wherein in the assembled state of the axle the groove (81) is arranged on the underside of the axle (51) and wires which can be passed through the wire feed are guided out of the axle between the hub (5) and the frame (2).

16. Cycle as claimed in any of claims 8-15, wherein the pulse width modulating means convert a voltage of about 24 volts into a voltage of about 6 volts.

17. Cycle as claimed in one or more of the foregoing claims, wherein the battery (4) comprises two or more parts of the same voltage.

18. Cycle as claimed in one or more of the claims 1-17, comprising a tube pivoting device.

19. Cycle as claimed in claim 18, comprising operating means for operating fixing means (111).

20. Cycle as claimed in claim 18 or 19, further comprising at least one hinge (117) comprising a hinge pin for rotating the tube pivoting device.

21. Cycle as claimed in claim 18, 19 or 20, further comprising spring means (119) for urging apart first and second hooking means (113, 116).

22. Cycle as claimed in any of claims 18-21, wherein the spring means (119) are a helical spring for the purpose of urging apart the hinge pin (117), the spring means (119) and the hooking means (113, 116) when the fixing means (111) are released, and the fixing means force together the hooking means and the spring when the fixing means are fastened.

23. Cycle as claimed in one or more of the claims 18-22, further comprising a support wheel (108) for supporting a frame (2) of a cycle (1).

24. Cycle as claimed in any of claims 18-23, further comprising a support wheel (108) for supporting the cycle (1) in folded state which is arranged on the frame (2).

25. Cycle as claimed in one or more of the claims 1-24, comprising axle mounting means.

26. Cycle as claimed in claim 25, wherein a first part of the axle mounting means has at least one flat side for receiving a second part of the axle mounting means, and the second part has at least one flat side for receiving the first part.

27. Cycle as claimed in claim 26, comprising:
- blocking means for blocking the saddle (9),
- operating means for releasing the saddle (9), and
- a spring for urging the saddle upward.

28. Cycle as claimed in claim 26 or 27, comprising:
- an electric motor (103) for driving thereof,
- operating means (104, 105) for switching the electric motor (103).

29. Cycle as claimed in one or more of the claims 1-28, comprising drive means.

30. Cycle as claimed in one or more of the foregoing claims, wherein the battery (4) comprises a number of elements enclosed by a thin plastic body.

## Patentansprüche

1. Fahrrad (1), mit:
- einem Rahmen (2),
- einem oder mehreren Rädern, die am Rahmen (2) über Radachsen drehbar angeordnet sind,
- Antriebsmitteln zum vollständigen oder teilweisen Antreiben der Räder mit menschlicher Kraft über Übertragungsmittel (6), wobei ein Hilfsantrieb einen Teil der Antriebsmittel bildet,
- einer Energiequelle, die eine Batterie (4) enthält, die in einem Hauptrohr (3) des Rahmens angeordnet ist, wobei das Hauptrohr (3) eine Ladeverbindung (11) aufweist,
- einer Messeinrichtung (52) zum Messen der muskulären Antriebskraft des Fahrers und einer Steuereinrichtung (55) zum Steuern der Energie des Hilfsantriebs mit Bezug auf die gemessene muskuläre Kraft des Fahrers; und
- einer externen Ladevorrichtung (26), die über die Ladeverbindung (11) mit der Batterie (4) gekoppelt werden kann zum Laden der in dem Hauptrohr (3) des Rahmens angeordneten Batterie (4), wobei die Energiequelle und/oder der Hilfsantrieb in oder am Fahrrad (1) auf eine von außen so unsichtbar wie mögliche Art und Weise angeordnet sind, wobei die Batterie (4) in dem Hauptrohr (3) des Rahmens angeordnet ist und der Hilfsantrieb einen elektrischen Radnabenmotor (5) aufweist.

2. Fahrrad nach Anspruch 1, wobei die Steuereinrichtung für die Batterie (4) zum Laden der Batterie im Rahmen (2) angeordnet ist.

3. Fahrrad nach Anspruch 2, wobei die Steuereinrichtung für die Batterie zusammen mit der Batterie (4) und einem Schließelement (15) zum Schließen des Hauptrohres (3) in dem Rahmen (2) angeordnet ist.

4. Fahrrad nach Anspruch 2 oder 3, wobei die Batteriesteuereinrichtung auch so ausgebildet ist, dass sie das Entladen der Batterie (4) steuern kann.

5. Fahrrad nach einem der Ansprüche 1 bis 4, versehen mit einer zweiten Ladevorrichtung, die solche Abmessungen und ein solches Gewicht hat, dass sie vom Fahrer leicht getragen werden kann.

6. Fahrrad nach einem der Ansprüche 1 bis 5, wobei der elektrische Radnabenmotor (5) mit einem Getriebe mit zwei oder mehr Zahnrädern versehen ist, wobei das Getriebe vorzugsweise ein oder mehrere Planetensysteme aufweist.

7. Fahrrad nach einem oder mehreren der vorstehenden Ansprüche, versehen mit einer Nut (81) in der Achse, in welcher der elektrische Radnabenmotor (5) angeordnet ist, wobei die Nut (81) sich wenigstens von dem elektrischen Radnabenmotor bis zu dem Rahmen (2) erstreckt, um das Kabel von dem Radnabenmotor in das inner des Rahmens zu führen.

8. Fahrrad nach einem oder mehreren der vorstehenden Ansprüche, versehen mit einer Impulsbreite- Modulationseinrichtung, um die elektrischen Teile mit einer niedrigeren Spannung als die der Batterie (4), beispielsweise 6 Volt für die Spannung der Beleuchtung, zu versorgen.

9. Fahrrad nach einem oder mehreren der vorstehenden Ansprüche, versehen mit einem Datenbus (57), der mit einer Messeinrichtung, einer ersten Steuereinrichtung (160), einer zweiten Steuereinrichtung, den Dateneingabe- und/oder Datenausgabemitteln verbunden ist.

10. Fahrrad nach Anspruch 9, versehen mit einem Verbinder (14) zum Anschließen eines externen Computer (27) und/oder Service-Anschluss zur Erleichterung der Wartung.

11. Fahrrad nach einem oder mehreren der vorstehenden Ansprüche mit einem lösbaren und/oder drahtlosen Betätigungsanschluss (17) zum Blockieren/ Entblockieren der Antriebseinrichtung und anderer Funktionen des Fahrrades.

12. Fahrrad nach einem oder mehreren der vorstehenden Ansprüche, wobei die Batterie (4) aus zwei oder mehr Teilen besteht, beispielsweise jeweils für eine Spannung von 6 oder 12 Volt geeignet, die miteinander sowohl parallel als auch in Reihe geschaltet sind, um zu ermöglichen, dass ein Laden parallel stattfindet, wobei die Energieversorgung des Hilfsantriebes in der Reihenschaltung stattfinden kann.

13. Fahrrad nach einem oder mehreren der Ansprüche 1 bis 12, weiterhin mit einer Schalteinrichtung zum Schalten des Motors in einem dynamo zum Erzeugen von elektrischer Energie.

14. Fahrrad nach einem oder mehreren der vorstehenden Ansprüche, weiterhin mit einer Kabeldurchführung durch eine Nut (81) in einer Achse (51).

15. Fahrrad nach Anspruch 14, wobei im zusammengebauten Zustand der Achse die Nut (81) an der Unterseite der Achse (51) angeordnet ist und Kabel, die durch die Kabelführung hindurchgeführt sind, aus der Achse zwischen der Nabe (5) und dem Rahmen (2) herausgeführt sind.

16. Fahrrad nach einem der Ansprüche 8 bis 15, wobei die Impulsbreite-Modulationseinrichtung eine Spannung von ungefähr 24 Volt in eine Spannung von ungefähr 6 Volt umwandelt.

17. Fahrrad nach einem oder mehreren der vorstehenden Ansprüche, wobei die Batterie (4) zwei oder mehr Teile derselben Spannung enthält.

18. Fahrrad nach einem oder mehreren der Ansprüche 1 bis 17, mit einer Rohrschwenkvorrichtung.

19. Fahrrad nach Anspruch 18, mit einer Betätigungseinrichtung zum Betätigen von Fixiermitteln (111).

20. Fahrrad nach Anspruch 18 oder 19, weiterhin mit wenigstens einem Scharnier (117), das einen Scharnierzapfen aufweist, um die Rohrschwenkvorrichtung zu drehen.

21. Fahrrad nach Anspruch 18, 19 oder 20, weiterhin mit Fe~ dermitteln (119) zum Auseinanderzwängen von ersten und zweiten Hakenmitteln (113, 116).

22. Fahrrad nach einem der Ansprüche 18 bis 21, wobei die Federmitteln (119) eine Wendelfeder sind, um den Gelenkzapfen (117), die Federmittel (119) und die Hakenmittel (113, 116) voneinander wegzuzwängen, wenn die Befestigungsmittel (111) freigegeben sind und die Befestigungsmittel die Hakenmittel und die Feder zusammenzwängen, wenn die Befestigungsmittel befestigt sind.

23. Fahrrad nach einem oder mehreren der Ansprüche 18 bis 22, weiterhin mit einem Stützrad (108) zum Stützen eines Rahmens (2) eines Fahrrades (1.).

24. Fahrrad nach einem der Anspräche 18 bis 23, weiterhin mit einem Stützrad (108) zum Stützen des Fahrrades (1) im zusammengeklappten Zustand, das am Rahmen (2) angeordnet ist.

25. Fahrrad nach einem oder mehreren der Ansprüche 1 bis 24, mit Achsenmontagemitteln.

26. Fahrrad nach Anspruch 25, wobei ein erster Teil der Achsenmontagemittel wenigstens eine abgeflachte Seite zum Aufnehmen eines zweiten Teils der Achsenmontagemittel hat, und der zweite Teil wenigstens eine flache Seite zum Aufnehmen des ersten Teils hat.

27. Fahrrad nach Anspruch 26 mit:
- Blockiermitteln zum Blockieren des Sattels (9),
- Betätigungsmittel zum Lösen des Sattels (9), und
- einer Feder zum Aufwärtszwängen des Sattels.

28. Fahrrad nach Anspruch 26 oder 27, mit:
- einem Elektromotor (103) zum Antreiben desselben,
- Betätigungsmittel (104, 105) zum Schalten des Elektromotors (103).

29. Fahrrad nach einem oder mehreren der Ansprüche 1 bis 28, mit Antriebsmitteln.

30. Fahrrad nach einem oder mehreren der vorstehenden Ansprüche, wobei die Batterie (4) eine Anzahl von Elementen aufweist, die von einem dünnen Kunststoffkörper umschlossen sind.

## Revendications

1. Bicyclette (1), comprenant :
un cadre (2),
une ou plusieurs roues agencées de manière rotative sur le cadre (2) via des essieux de roue,
des moyens d'entraînement pour entraîner les roues totalement ou partiellement avec la force humaine via des moyens de transmission (6), une partie formant propulsion auxiliaire des moyens d'entraînement,
une source de puissance comprenant une batterie (4) agencée dans un tube principal (3) du cadre, ledit tube principal (3) comprenant un raccordement de chargeur (11),
des moyens de mesure (52) pour mesurer la force d'entraînement musculaire du cycliste et des moyens de commande (55) pour commander la puissance de la propulsion auxiliaire par rapport à la puissance musculaire mesurée du cycliste ; et
un dispositif de chargement externe (26) destiné à être couplé via le raccordement de chargeur (11) à la batterie (4) pour changer la batterie (4) agencée dans le tube principal (3) du cadre, dans laquelle la source de puissance et/ou la propulsion auxiliaire sont agencées dans ou sur la bicyclette (1) de sorte qu'elle est aussi invisible que possible de l'extérieur, dans laquelle la batterie (4) est agencée dans le tube principal (3) du cadre, et ladite propulsion auxiliaire comprenant un moteur de moyeu électrique (5).

2. Bicyclette selon la revendication 1, dans laquelle les moyens de commande de batterie (4) pour charger la batterie sont agencés dans le cadre (2).

3. Bicyclette selon la revendication 2, dans laquelle les moyens de commande de batterie sont agencés dans le cadre (2) conjointement avec la batterie (4) et un élément de fermeture (15) pour fermer le tube principal (3).

4. Bicyclette selon la revendication 2 ou 3, dans laquelle les moyens de commande de batterie sont également adaptés pour commander la décharge de la batterie (4).

5. Bicyclette selon l'une quelconque des revendications 1 à 4, prévue avec un deuxième dispositif de chargement qui a des dimensions et un poids de sorte qu'il est facilement transporté par le cycliste.

6. Bicyclette selon l'une quelconque des revendications 1 à 5, dans laquelle le moteur de moyeu électrique (5) est prévu avec une transmission avec deux ou plusieurs engrenages, laquelle transmission comprend de préférence un ou plusieurs systèmes planétaires.

7. Bicyclette selon une ou plusieurs des revendications précédentes, prévue avec une rainure (81) dans l'essieu dans lequel le moteur de moyeu électrique (5) est agencé, laquelle rainure (81) s'étend au moins à partir du moteur de moyeu électrique jusqu'au cadre (2) afin de fournir l'alimentation par le biais du fil, du moteur de moyeu jusqu'à l'intérieur du cadre.

8. Bicyclette selon une ou plusieurs des revendications précédentes, prévue avec des moyens de modulation d'impulsions en durée pour alimenter en puissance les parties électriques à une tension inférieure à la batterie (4), par exemple 6 volts pour la tension de l'éclairage.

9. Bicyclette selon une ou plusieurs des revendications précédentes, prévue avec un bus de données (57) raccordé à des moyens de mesure, à des premiers moyens de commande (160), à des deuxièmes moyens de commande, à des moyens d'entrée de données et/ou à des moyens de sortie de données.

10. Bicyclette selon la revendication 9, prévue avec un connecteur (14) pour y raccorder un ordinateur externe (27) et/ou un terminal de service afin de faciliter l'entretien.

11. Bicyclette selon une ou plusieurs des revendications précédentes, comprenant un terminal de fonctionnement amovible et/ou sans fil (17) pour bloquer/débloquer les moyens d'entraînement et d'autres fonctions de la bicyclette.

12. Bicyclette selon une ou plusieurs des revendications précédentes, dans laquelle la batterie (4) comprend deux parties ou plus, par exemple, chacune appropriée pour une tension de 6 ou 12 volts, qui sont raccordées entre elles à la fois en parallèle et en série pour permettre que le chargement ait lieu en parallèle alors que l'alimentation de puissance à la propulsion auxiliaire peut avoir lieu avec un raccordement en série.

13. Bicyclette selon une ou plusieurs des revendications 1 à 12, comprenant en outre des moyens de commutation pour commuter le moteur en dynamo afin de générer de l'énergie électrique.

14. Bicyclette selon une ou plusieurs des revendications précédentes, comprenant en outre un passage de fil à travers une rainure (81) dans un essieu (51).

15. Bicyclette selon la revendication 14, dans laquelle, à l'état assemblé de l'essieu, la rainure (81) est agencée sur la face inférieure de l'essieu (51) et les fils qui peuvent être passés par l'alimentation de fil sont guidés hors de l'essieu entre le moyeu (5) et le cadre (2).

16. Bicyclette selon l'une quelconque des revendications 8 à 15, dans laquelle les moyens de modulation d'impulsions en durée convertissent une tension d'environ 24 volts en une tension d'environ 6 volts.

17. Bicyclette selon une ou plusieurs des revendications précédentes, dans laquelle la batterie (4) comprend deux parties ou plus de même tension.

18. Bicyclette selon une ou plusieurs des revendications 1 à 17, comprenant un dispositif de pivotement de tube.

19. Bicyclette selon la revendication 18, comprenant des moyens d'actionnement pour actionner les moyens de fixation (111).

20. Bicyclette selon la revendication 18 ou 19, comprenant en outre au moins une articulation (117) comprenant une broche d'articulation pour faire tourner le dispositif de pivotement de tube.

21. Bicyclette selon la revendication 18, 19 ou 20, comprenant en outre des moyens de ressort (119) pour écarter des premier et deuxième moyens d'accrochage (113, 116).

22. Bicyclette selon l'une quelconque des revendications 18 à 21, dans laquelle les moyens de ressort (119) sont un ressort hélicoïdal afin d'éloigner la broche d'articulation (117), les moyens de ressort (119) et les moyens d'accrochage (113, 116) lorsque les moyens de fixation (111) sont libérés, et les moyens de fixation forcent ensemble les moyens d'accrochage et le ressort lorsque les moyens de fixation sont fixés.

23. Bicyclette selon une ou plusieurs des revendications 18 à 22, comprenant en outre une roue de support (108) pour supporter un cadre (2) d'une bicyclette (1).

24. Bicyclette selon l'une quelconque des revendications 18 à 23, comprenant en outre une roue de support (108) pour supporter la bicyclette (1) dans un état plié qui est agencé sur le cadre (2).

25. Bicyclette selon une ou plusieurs des revendications 1 à 24, comprenant des moyens de montage d'essieu.

26. Bicyclette selon la revendication 25, dans laquelle une première partie des moyens de montage d'essieu a au moins un côté plat pour recevoir une deuxième partie des moyens de montage d'essieu, et la deuxième partie a au moins un côté plat pour recevoir la première partie.

27. Bicyclette selon la revendication 26, comprenant :
des moyens de blocage pour bloquer la selle (9),
des moyens d'actionnement pour libérer la selle (9), et
un ressort pour pousser la selle vers le haut.

28. Bicyclette selon la revendication 26 ou 27, comprenant :
un moteur électrique (103) pour son entraînement,
des moyens d'actionnement (104, 105) pour commuter le moteur électrique (103).

29. Bicyclette selon une ou plusieurs des revendications 1 à 28, comprenant des moyens d'entraînement.

30. Bicyclette selon une ou plusieurs des revendications précédentes, dans laquelle la batterie (4) comprend un certain nombre d'éléments enfermés par un corps en plastique fin.
